# EUROPÄISCHE PATENTANMELDUNG

(11) **EP 2 786 653 A1**
(43) Veröffentlichungstag der Anmeldung: **08.10.2014**
(21) Anmeldenummer: 14161355.4
(22) Anmeldetag: 24.03.2014
(51) Int. Cl.: A01G 1/00

(54) **Vorrichtung zum Auf- oder Abwickeln von flächigem Bahnenmaterial**

(30) Priorität: 27.03.2013 DE 202013101350 U
(71) Anmelder: SMG Sportplatzmaschinenbau GmbH, 89269 Vöhringen (DE)
(72) Erfinder: Owegeser, Johann, 89189 Illerrieden (DE)
(74) Vertreter: Baumann, Rüdiger Walter

(57) **Zusammenfassung**

Vorrichtungen zum Auf- oder Abwickeln von flächigem Bahnenmaterial, wie z.B. Bahnen bzw. Streifen von Kunstrasen, mit mindestens einer Zange (10, 20), wobei wenigstens zwei einen Wickelraum zumindest teilweise begrenzende Greif- bzw. Zangenelemente (11, 12, 21, 22) mit jeweils wenigstens einer an den Enden der Greif- bzw. Zangenelemente angeordneten, eine Walzenfläche aufweisenden Walze (30, 40), wobei wenigstens eine der Walzen rotatorisch antreibbar ist und die Walzen an einer Wicklung des flächigen Bahnenmaterials anlegbar sind, um das flächige Bahnenmaterial für das Auf- oder Abwickeln in eine zu einer Drehbewegung der Walzen gegenläufige Wickelbewegung zu versetzen.

## Beschreibung

Die Erfindung betrifft eine Vorrichtung zum Auf- oder Abwickeln von flächigem Bahnenmaterial, wie zum Beispiel Bahnen beziehungsweise Streifen von Kunstrasen. Dabei geht es darum, das Bahnenmaterial, welches auf einer Rolle angeordnet ist, auf einer entsprechenden Fläche, wie zum Beispiel einer Sportfläche auszubringen. Die umgekehrte Aufgabe kann mit der Vorrichtung nach der Erfindung selbstverständlich auch gelöst werden, nämlich das Aufnehmen einer solchen Fläche entweder nach deren Verschleiß oder zum Abtransport auf eine andere Fläche. Demzufolge eignet sich die Vorrichtung sowohl zum Aufwickeln, wie auch zum Abwickeln von flächigem Bahnenmaterial oder von Bahnenmaterial, das aus dem Zerteilen einer Fläche resultiert.

Aus dem Stand der Technik ist eine Vorrichtung zum Verlegen von Bahnenmaterial bekannt, wobei eine solche Bahn beispielsweise auf eine Rolle aufgewickelt ist. Dabei muss die Rolle auf einer entsprechenden Achse beziehungsweise Welle, die durch die Rolle hindurchgeführt ist, gewickelt sein, damit die Vorrichtung des Standes der Technik diese Rolle zu greifen vermag. Diese Vorrichtung ist demzufolge auch nur für das Auslegen von solchem Bahnenmaterial geeignet und nicht für den umgekehrten Fall, d.h. für das Aufnehmen von Bahnenmaterial von einer Rasen- beziehungsweise Kunstrasenfläche, wie zum Beispiel einer Sportplatzfläche. Die Vorrichtung ist zudem recht kompliziert und es ist erforderlich, die Rollenbahn in entsprechende Auflagen einer Haltevorrichtung einzulegen. Dieses muss beidseitig erfolgen, damit ein Abrollvorgang stattfinden kann. Über einen Gitterrost wird beispielsweise dann die abzuwickelnde Bahn auf die zu belegende Fläche heruntergeführt. Wie bereits erwähnt, ist die Vorrichtung sehr aufwändig und es ist erforderlich, dieses Bahnenmaterial auf spezielle Wellen oder Achsen aufzuwickeln, um mit der Vorrichtung des Standes der Technik die Rolle überhaupt abwickeln zu können.

Des Weiteren ist eine Vorrichtung bekannt, die ähnlich der zuvor beschriebenen Lösung Greiferarme aufweist, die beidseitig Auflagen besitzen, in die eine Welle oder Achse einzulegen ist, um die die Bahn für den Auslegevorgang vorher gewickelt werden muss. Die Vorrichtung des Standes der Technik ist dabei sehr aufwändig in ihrer Herstellung und ist in der Lage, nur in eine Richtung zu arbeiten, das heißt, die Rolle befindet sich in Verlegerichtung hinten an der Maschine und wird von dort abgerollt. Die Vorrichtung selbst muss daher im Rückwärtsgang gefahren werden. Die Vorrichtung des Standes der Technik ist dabei in der beschriebenen Richtung bspw. für das Auslegen von Kunstrasen geeignet, während die Maschine, wenn sie anders herum bewegt wird, für das Aufnehmen dieser Flächen geeignet ist. Insgesamt ist es allerdings auch hier erforderlich, die Rollen für die Kunstrasenbahnen mit Wellen beziehungsweise Achsen zu versehen. Diese werden beidseitig in dazu geeignete Zangen eines Hebearmes eingelegt.

Ausgehend von diesem Stand der Technik ist es Aufgabe der Erfindung, eine Vorrichtung vorzuschlagen, mit der das Verlegen von flächigem Bahnenmaterial beziehungsweise das Aufnehmen von flächigem Bahnenmaterial wesentlich vereinfacht wird. Insbesondere bei der Herstellung einer solchen Vorrichtung soll der Aufwand verringert werden. Die Vorrichtung soll dabei auch den Aufwand beim bestimmungsgemäßen Einsatz der Vorrichtung verringern.

Die Erfindung geht von dem vorher beschriebenen Stand der Technik aus und schlägt eine Vorrichtung zum Auf- oder Abwickeln von flächigem Bahnenmaterial vor. Bei diesem Bahnenmaterial handelt es sich zum Beispiel um Bahnen beziehungsweise Streifen von Kunstrasen. Die Vorrichtung weist hierzu mindestens eine Zange auf, die mit wenigstens zwei Greif- bzw. Zangenelementen versehen ist, die zumindest teilweise einen Wickelraum begrenzen. An den Enden der Greif- bzw. Zangenelemente ist jeweils wenigstens eine Walze angeordnet. Diese Walze weist eine Walzenfläche, d.h. eine die Mantelfläche der Walze ganz oder teilweise bildende Fläche auf. Wenigstens eine der Walzen ist rotatorisch antreibbar, das heißt über einen geeigneten Antrieb in Drehbewegung versetzbar. In der Vorrichtung, die dazu vorgesehen ist, dass zu Wicklungen aufgewickelte Bahnenmaterial aufzunehmen bzw. während des Auf- oder Abwickelns zu halten und zu führen, sind die Walzen an dieser Wicklung des flächigen Bahnenmaterials anlegbar, um das aufgewickelte flächige Bahnenmaterial bzw. die daraus gebildete Wicklung für das Auf- bzw. Abwickeln in eine Drehbewegung zu versetzen. Die Wickelbewegung ist dabei insbesondere gegenläufig zur Drehbewegung der Walzen ausgerichtet. Der Vorteil einer solchen Vorrichtung liegt auf der Hand. Der Greifer beziehungsweise die Zange der Greifer muss nicht zwingend zweiseitig vorgesehen sein, sondern es genügt eine einseitig beziehungsweise eine mit nur einer Zange versehene Greifeinrichtung. Dabei ist ein weiterer Vorteil der Vorrichtung der, dass man für die Rolle des Bahnenmaterials sowohl beim Auslegen wie auch beim Aufnehmen keine Welle beziehungsweise Achse mehr benötigt, auf der das Bahnenmaterial aufgewickelt werden muss. Dies ist ein wesentlicher Vorteil gegenüber dem Stand der Technik. Die Wicklung, die aus dem flächigen Bahnenmaterial gebildet ist, wird innerhalb der Greif- bzw. Zangenelemente gehalten und dort über die Walzen in Rotation versetzt. Es entfällt somit eine Welle, die diese Drehbewegung induziert. Des Weiteren ist die Walze der Vorrichtung rotatorisch antreibbar, das heißt, sie kann in einem Fall durch eine Zwangsbewegung, die von der Bewegung der Vorrichtung selbst abgeleitet ist, angetrieben werden, beispielsweise aus der Fahrbewegung der Vorrichtung und der Bewegung der Walzen über den Boden. Sie kann allerdings auch mit einem entsprechenden Antrieb, vorzugsweise einem steuerbaren Antrieb, versehen sein. Durch diesen ist die Walze angetrieben. Über den Antrieb kann auch die Verlegegeschwindigkeit beziehungsweise die Aufnahmegeschwindigkeit des Bahnenmaterials bestimmt werden. Der Aufwand bei Bau und Betrieb einer solchen Vorrichtung ist beispielsweise auch dadurch gegenüber den Vorrichtungen des Standes der Technik verringerbar, dass nicht zwingend ein eigener Antrieb für die Vorrichtung selbst erforderlich ist. So kann beispielsweise der Rotationsantrieb einer der Walzen als Bewegungsantrieb genutzt werden beziehungsweise die Rotationsbewegung der Walze treibt gleichzeitig die Vorrichtung an. Die Vorrichtung kann beispielsweise als geschleppte beziehungsweise geschobene Vorrichtung ausgeführt werden. Die Vorrichtung wird dabei mit einer Zugmaschine angetrieben bzw. bewegt, wodurch natürlich der Aufwand für die Anschaffung einer solchen Vorrichtung verringert werden kann. Dies ist beispielsweise für Anwender wichtig, die bereits im Besitz von entsprechenden Zugmaschinen sind und nur eine entsprechende Kupplung oder eine Schnittstelle für das Ankoppeln der Vorrichtung benötigen. Hierüber kann dann die Vorrichtung bewegt werden. Die Schnittstelle kann dabei selbstverständlich Schnittstellen für das Anschließen der hydraulischen Elemente oder elektrischen Elementen der Vorrichtung aufweisen. Demzufolge ist die Vorrichtung auch geeignet, um über die Antriebsaggregate der Zugmaschine betrieben zu werden. Selbstverständlich schließt dies nicht aus, dass die Vorrichtung auch einen eigenen Bewegungsantrieb aufweisen kann, um die Vorrichtung für das Auslegen oder Aufnehmen von Rollenbahnen zu bewegen. Insgesamt erreicht man durch die Vorrichtung auch eine kompaktere Wicklung der Rolle selbst. Beim Auslegen ist dabei ggf. die Auslegegeschwindigkeit steuerbar, sodass die Vorrichtung erhebliche Vorteile gegenüber den eingangs beschriebenen Lösungen des Standes der Technik aufweist und insbesondere kostengünstiger erstellbar ist. Insbesondere reduziert sich auch der Aufwand beim bestimmungsgemäßen Einsatz, nämlich durch das Einsparen einer Welle beziehungsweise Achse, auf der das Bahnenmaterial aufgewickelt beziehungsweise von der das Bahnenmaterial abgewickelt wird. Dies ist natürlich insgesamt kostengünstiger, da beim Transport Gewicht eingespart wird. Beim Auslegen dieser Bahnen entfallen zudem die Wellen, die wieder zum Hersteller zurücktransportiert werden müssten, um weitere Bahnen wieder aufzuwickeln. All dies ist nicht mehr notwendig, sodass entscheidende Vorteile gegenüber dem bekannten Stand der Technik erreicht werden.

Der Begriff "Wicklung" bzw. "Wicklungen" bezeichnet im Zusammenhang mit der vorliegenden Erfindung eine aus einem aufgewickelten flächigen Bahnenmaterial gebildete Rolle.

Der Begriff "Bahnenmaterial" bzw. "flächiges Bahnenmaterial" bezeichnet im Zusammenhang mit der vorliegenden Erfindung ein eine größere Längs- als Quererstreckung aufweisendes flaches Gebilde. Dieses wird entweder direkt mit entsprechenden Dimensionen hergestellt oder aus einer bestehenden Fläche herausgeschnitten. Bei dem flächigen Bahnenmaterial handelt es sich beispielsweise um in Streifen bzw. Bahnen geschnittenen Natur- oder Kunstrasen oder ein den Belag von Sportplätzen bildendes Kunststoffmaterial. Die Erfindung ist hierauf jedoch nicht beschränkt.

Die Begriffe "Zangenelement" bzw. "Greifelement" sind im Zusammenhang mit der vorliegenden Erfindung synonym verwendbar. In der Regel sind Greif- oder Zangenelemente als Schenkel oder Backen der Zange relativ zueinander bewegbar, wodurch die Greifbewegung der Zange realisiert wird

Eine Vorrichtung wie zuvor beschrieben zeichnet sich in einer Weiterbildung dadurch aus, dass zwei sich parallel zueinander erstreckende Walzen vorgesehen sind. Die Walzen sind dabei im Wesentlichen senkrecht zu einer Vorschubrichtung der Vorrichtung ausgerichtet und erstrecken sich in Richtung der Breite des Bahnenmaterials. Durch diese Ausgestaltung gelingt es, die Vorrichtung für das Auslegen und Aufnehmen von Bahnenmaterial in zwei Fahrtrichtungen weiter zu verbessern. Es ist nicht ausgeschlossen, das beidseitige Aufnehmen beziehungsweise Auslegen, d.h. in zwei Fahrtrichtungen, auch mit nur einer Walze vorzunehmen. Durch das Vorsehen von zwei Walzen wird allerdings der Auf- beziehungsweise Abwickelvorgang erheblich verbessert und das Bahnenmaterial geführt. Insgesamt wird durch eine solche Anordnung auch eine höhere Verlege- beziehungsweise Aufnahmegeschwindigkeit und eine höhere Genauigkeit beim Auslegen beziehungsweise Aufnehmen erreicht.

Wie bereits erwähnt, zeichnet sich eine vorteilhafte Weiterbildung der Erfindung, die natürlich auch im Zusammenhang mit den bereits zuvor beschriebenen Ausführungsformen anwendbar ist, dadurch aus, dass die mindestens eine Walze zwangsangetrieben ist. Zwangsangetrieben im Sinne der Erfindung bedeutet, dass ein mechanischer Antrieb dadurch erfolgt, dass die Vorrichtung beispielsweise durch eine Zugmaschine bewegt wird. Durch die Bewegung wird die Fahrbewegung der Vorrichtung beispielsweise mechanisch über ein Getriebe, eine Kardanwelle oder dergleichen auf die Walze beziehungsweise auf beide Walzen übertragen. Dabei kann selbstverständlich ein geeignetes Schaltgetriebe zwischengeschaltet werden, um beispielsweise die Wickelgeschwindigkeit oder -richtung zu verändern.

Selbstverständlich ist es auch möglich, eine Vorrichtung vorzusehen, bei welcher die mindestens eine Walze einen elektrischen oder hydraulischen Antrieb aufweist. Es entfällt dann der Aufwand für die mechanische Kopplung. Man kann den elektrischen oder hydraulischen Antrieb für die Walze direkt beziehungsweise in der Nähe des Zentrums der Rollenbahn anordnen, um mit relativ geringer Auslegung des Antriebes auszukommen. Ein solcher elektrischer oder hydraulischer Antrieb kann natürlich steuerbar sein, wodurch sich das Ergebnis der Auf-/Abwicklung verbessern lässt. Beim Verlegen ist natürlich eine solche Steuerungsmöglichkeit von Vorteil, um die Bahn gleichmäßig und straff auf dem Boden auslegen zu können. Die Verlegegeschwindigkeit lässt sich auch über die Steuerung des elektrischen oder hydraulischen Antriebes beeinflussen.

Von Vorteil ist es weiter, wenn gemäß einer weiteren Ausführungsform, die ebenfalls im Zusammenhang mit den zuvor beschriebenen Varianten und Ausführungsformen anwendbar ist, zwei parallel zueinander ausgerichtete Zangen vorgesehen sind. Diese Ausgestaltung erreicht eine stabile Führung des Bahnenmaterials bzw. der Wicklung.

Die Vorrichtung zeichnet sich in einer Weiterbildung dadurch aus, dass die mindestens eine Walze an mindestens einer Zange, d.h. am freien Ende der die Zange bildenden Greif- oder Zangenelementen, gelagert ist. Durch diese Ausgestaltung gelingt es, eine gesonderte Lagerung für die Walze zu vermeiden, indem die Walze direkt an der Zange vorgesehen ist. Dabei lässt sich natürlich eine an der Zange vorgesehene Achse nutzen, um die Walze zu lagern.

Von Vorteil ist es weiter, wenn die Vorrichtung sich dadurch auszeichnet, dass die mindestens eine Zange zum Durchführen einer Greifbewegung ausgebildet ist. Hierbei ist die Zange derart ausgebildet, dass die Greif- oder Zangenelemente relativ zueinander bewegbar sind, wodurch dann die Greifbewegung realisiert wird. Gleichermaßen von der Erfindung umfasst ist selbstverständlich auch eine Variante, in der eines der beiden Greif- oder Zangenelemente feststehend und das andere Greif- oder Zangenelement relativ zu diesem beweglich ist. Diese Ausgestaltung dient dazu, die Rolle entweder aufzunehmen oder abzulegen, was bedeutet, dass ein Transport der Rolle aus der Vorrichtung beziehungsweise in diese hinein realisiert werden kann.

Eine Weiterbildung der zuvor beschriebenen Lösung zeichnet sich dadurch aus, dass jede der Zangen feststehende und bewegbare Greifelemente beziehungsweise Zangenelemente aufweist. Dabei ist bevorzugt eines der Zangen- beziehungsweise Greifelemente feststehend und das andere bewegbar. Dadurch lässt sich eine konstruktive einfache Lösung realisieren, die Herstellungsaufwand einspart. Auch wird natürlich die Störanfälligkeit einer solchen Vorrichtung durch diese Ausgestaltung verringert.

Die Vorrichtung zeichnet sich weiterhin dadurch aus, dass die Greif- oder Zangenelemente der Zange hydraulisch relativ zueinander bewegbar sind. Dabei ist es von Vorteil, dass für eine Greifbewegung der Zangen eine mechanische Kopplung an ein Fahrzeug nicht mehr erforderlich ist. Die Vorrichtung ist unabhängig von einem Antriebsfahrzeug einsetzbar.

Die Vorrichtung zeichnet sich des Weiteren dadurch aus, dass an dem feststehenden Greif- oder Zangenelementen jeweils eine Greifelementachse vorgesehen ist, über die, vorzugsweise angetrieben von Hydraulikzylindern, die Greifbewegung als Schwenkbewegung erfolgt. Eine solche Ausgestaltung ist geeignet, das Greifen zu vereinfachen, da dies durch die Vorrichtung selbst bewerkstelligt werden kann. Es muss kein gesondertes Aggregat, beispielsweise einer Antriebsvorrichtung vorgesehen werden. Mittels hydraulischer oder elektrischer Antriebe kann eine Schwenkbewegung vorgenommen werden. In der einfachsten Form ist es natürlich möglich, Hydraulikzylinder vorzusehen, um die Zangenbewegung aus einem vorhandenen Hydraulikaggregat der Vorrichtung abzuleiten.

Des Weiteren zeichnet sich die Vorrichtung dadurch aus, dass an den bewegbaren Greifelementen wenigstens eine Aussteifung, vorzugsweise zwei Aussteifungen vorgesehen sind. Diese Aussteifung(en) dient(en) der weiteren Erhöhung der Stabilität der Zange und insbesondere auch zur weiteren Verbesserung der Kompaktierung der Rolle bzw. Wicklung beim Aufwickelvorgang. Auch wird durch die Ausgestaltung, wie zuvor beschrieben, natürlich ein deckungsgleiches Aufwickeln beim Aufwickelvorgang gewährleistet, während beim Abwickeln natürlich eine sehr genaue und planparallele Verlegung der Rollenbahnen erfolgen kann.

Von weiterem Vorteil ist es, wenn die an den bewegbaren Greif- oder Zangenelementen angeordnete Walze eine Walzenschwenkachse aufweist und darüber schwenkbar gelagert ist. Alternativ kann die Walze an der Walzenschwenkachse auswechselbar befestigt sein, um zum Beispiel die wirksame Länge der bewegbaren Greif- oder Zangenelemente zu verändern. Beide Lösungen dienen dazu, den Einsatz größerer, das heißt durchmesser-größerer Rollen des Bahnenmaterial zu ermöglichen.

Es lassen sich so längere Betriebszeiten erzielen, d.h. ein Rollenwechsel ist seltener durchzuführen.

Ein weiterer Aspekt der Vorrichtung sieht vor, dass eine Transporthalterung zum Transportieren der Vorrichtung, bspw. mit einem Schlepper, vorgesehen ist. Der Vorteil einer solchen erfindungsgemäßen Weiterbildung ist der, dass für die Vorrichtung dann kein Fahrgestell notwendig ist. Die Vorrichtung kann sich während des bestimmungsgemäßen Einsatzes, beispielsweise auf den Walzen, abstützen und wird während des Transports über die Transporthalterung erfasst und zum Transportieren an oder auf einer entsprechenden Transportvorrichtung dort gehalten. Von Vorteil ist es dabei, wenn die Transporthalterung an den feststehenden Greifelementen der mindestens einen Zange angeordnet ist. Damit wird eine sehr stabile Halterung für die Vorrichtung geschaffen, die hochbelastbar ist. Da die Zange zumindest bezüglich der feststehenden Greif- oder Zangenelemente ein hohes Gewicht aufnehmen muss, muss dieses feststehende Greif- oder Zangenelement natürlich auch konstruktionsmäßig gut die Aufnahme dieser Lasten ausgelegt werden. Dabei ist es kein zusätzlicher Aufwand, die Transporthalterung der Vorrichtung am Greif- oder Zangenelement zu integrieren, sodass die Vorrichtung mittels der Halterung auch transportiert werden kann.

Die Transporthalterung ist zum Anheben einer Wicklung von flächigem Bahnenmaterial vertikal verkürzbar oder verschwenkbar. Mittels dieser Ausgestaltung kann eine Abstützung beim Anheben beziehungsweise Absenken der Bahnenrolle erreicht werden.

Die Vorrichtung zeichnet sich auch dadurch aus, dass die Transporthalterung mit einem elektromechanischen Antrieb ausgestattet ist. Dies dient beispielsweise dem Anheben und Absenken der Bahnenrolle bspw. auch ohne einen zusätzlichen Radlader oder dergleichen.

Die Vorrichtung weist gemäß einer Weiterbildung eine Schneid- oder Sägeeinrichtung zum Schneiden des flächigen Bahnenmateriales auf. Diese Schneid- oder Sägeinrichtung ist an dieser Vorrichtung selbst vorgesehen. Dabei ist die Schneidvorrichtung natürlich insbesondere für den Fall des Aufnehmens von Kunstrasenflächen oder von Belägen von Flächen, bspw. Sportplätzen, vorgesehen, weil dort die ausgelegten Bahnen fest miteinander verbunden sind. Im Übrigen sind die ehemaligen Nahtstellen oft nicht ohne weiteres erkennbar. Zum Abtragen der Bahnen müssen diese daher zunächst geschnitten werden. Dies erfolgt über die Schneidvorrichtung. Durch die Schneidvorrichtung, die beispielsweise in Aufnahmerichtung vor den Walzen der Vorrichtung angeordnet ist, wird eine Bahn von dem Belag abgetrennt und zu einer Bahnenmaterialrolle aufgerollt. Dabei ist es möglich, eine Schneid- oder Sägeeinrichtung nur einseitig an der Vorrichtung, bevorzugt natürlich in Bewegungsrichtung auf der rechten Seite, vorzusehen. Selbstverständlich ist es auch möglich, die Schneid- oder Sägeeinrichtung beidseitig vorzusehen.

Gemäß einer vorteilhaften Weiterbildung ist die Vorrichtung dadurch gekennzeichnet, dass die Schneid- oder Sägeeinrichtung an einem feststehenden Greif- oder Zangenelement der Zange vorgesehen ist. Dadurch lässt sich die Schneid- oder Sägeeinrichtung in einfacher Weise positionieren und ausrichten. Es lässt sich so auch die Schnittbreite der aufzunehmenden Bahn festlegen.

Von Vorteil ist es, wenn die Sägeeinrichtung als elektromotorisch antreibbare Kreissäge ausgebildet ist. In gleicher Weise ist es natürlich möglich, anstelle eines Elektromotors einen Hydraulikantrieb oder dergleichen vorzusehen. Der Vorteil ist, dass es dadurch gelingt, eine einfache und effiziente konstruktive Lösung und eine kompakte Bauform der Vorrichtung zur Verfügung zu stellen.

Die Vorrichtung ist bevorzugt als Anbauvorrichtung an ein selbstfahrendes Fahrzeug ausgebildet. Sie kann aber auch als selbstfahrendes Fahrzeug, das durch eigene Antriebsmechanismen bewegt wird, ausgebildet sein. Als Anbauvorrichtung ist es von Vorteil, wenn zumindest eine der Walzen zwangsangetrieben ist, um eine einfache mechanische Lösung zur Verfügung zu stellen, die den Aufwand für weitere Antriebe einspart. Eine genauer steuerbare und entsprechend beeinflussbare Vorrichtung wird alternativ dadurch zur Verfügung gestellt, dass zumindest an einer der Walzen ein hydraulischer oder elektromotorischer Antrieb vorgesehen wird. Dieser regelt die Aufnahmegeschwindigkeit für das Aufrollen beziehungsweise Abrollen und unterstützt eine kompakte Wickelung beim Aufrollvorgang. Beim Abwickeln wird natürlich durch einen solchen Antrieb erreicht, dass keine Verschiebungen auftreten oder ein Stau von Bahnenmaterial beim Abwickelvorgang durch, im Vergleich zur Bewegungsgeschwindigkeit, zu schnelles Abwickeln entsteht. Demzufolge schlägt die Erfindung insgesamt eine sehr einfache Vorrichtung vor, die als selbstfahrendes Fahrzeug, wie auch als Anbauvorrichtung ausgebildet sein kann. Dies richtet sich jeweils nach dem Bedarf des Anwenders der Vorrichtung. Beide Varianten sind von der Erfindung umfasst.

Die Erfindung wird nachfolgend anhand von Ausführungsbeispielen weiter beschrieben. Es zeigen:
- Fig. 1: die Seitenansicht einer Ausführungsform der erfindungsgemäßen Vorrichtung,
- Fig. 2a: die dreidimensionale Darstellung der Vorrichtung nach der Erfindung mit geöffneten Zangen,
- Fig. 2b: die dreidimensionale Darstellung der Vorrichtung nach der Erfindung mit geschlossenen Zangen.

In den Figuren sind gleiche oder einander entsprechende Elemente jeweils mit den gleichen Bezugszeichen bezeichnet und werden daher, sofern nicht zweckmäßig, nicht erneut beschrieben.

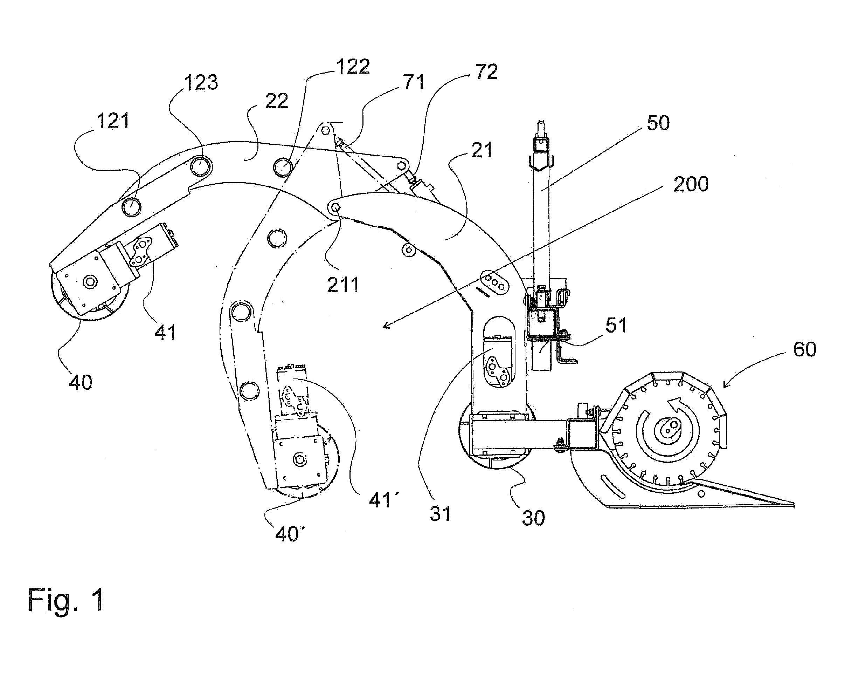

Die Fig. 1 zeigt in Seitenansicht eine Ausführungsform der erfindungsgemäßen Vorrichtung zum Auf- oder Abwickeln von flächigem Bahnenmaterial. Dabei besteht die erfindungsgemäße Vorrichtung aus wenigstens einer Zange 10 beziehungsweise 20. Die Zange 20 wird gebildet von jeweils einem feststehenden Zangen- oder Greifelement 21 und einem bewegbaren Zangen- oder Greifelement 22. Die Begriffe Zangenelement und Greifelement sind synonym verwendbar. Nachfolgend bezeichnen die Begriffe somit vergleichbare Elemente der Vorrichtung. Wie ersichtlich, sind das feststehende Zangenelement 21 und das bewegliche Zangenelement 22 über eine Greifelementachse 211 miteinander beweglich verbunden. Dabei ist ersichtlich, dass an dem feststehenden Greifelement 21 ein Hydraulikzylinder 72 angeordnet ist, der mit seinem Kolben an dem bewegbaren Greifelement 22 angreift. Dadurch lässt sich eine Verschwenkbewegung des bewegbaren Greifelementes 22 gegenüber dem feststehenden Greifelement 21 erzeugen, wie dies in der mit gestrichelter Linie dargestellten Stellung angedeutet wird.

An dem feststehenden Greifelement 21 ist in der gezeigten Ausführungsform eine Schneid- oder Sägeeinrichtung 60 angedeutet, die beispielsweise durch ein antreibbares Kreissägeblatt angegeben ist. Zur Schneid- oder Sägeeinrichtung 60 gehört auch noch eine Führungseinrichtung, die nicht näher bezeichnet ist. An dem feststehenden Greifelement 21 ist eine erste Walze 30 vorgesehen, die rotatorisch antreibbar ist. Dies geschieht hier durch einen hydraulischen Antrieb 31. An dem bewegbaren Greif- oder Zangenelement 22 ist eine weitere Walze 40 angeordnet, die ebenfalls über einen hydraulischen Antrieb 41 antreibbar ist. Zwischen den beiden Greifelementen 21, 22 befindet sich ein Wickelraum 200, der schematisch mit einem Pfeil angedeutet ist. In diesem Wickelraum 200 wird entweder eine Rolle, deren Material ausgelegt werden soll, eingelegt bzw. aufgenommen, um die Bahn dann zu verlegen, oder im umgekehrten Fall für das Aufnehmen einer Bahn wird in diesen Wickelraum 200 das Bahnenmaterial auf eine Rolle oder Wicklung aufgewickelt.

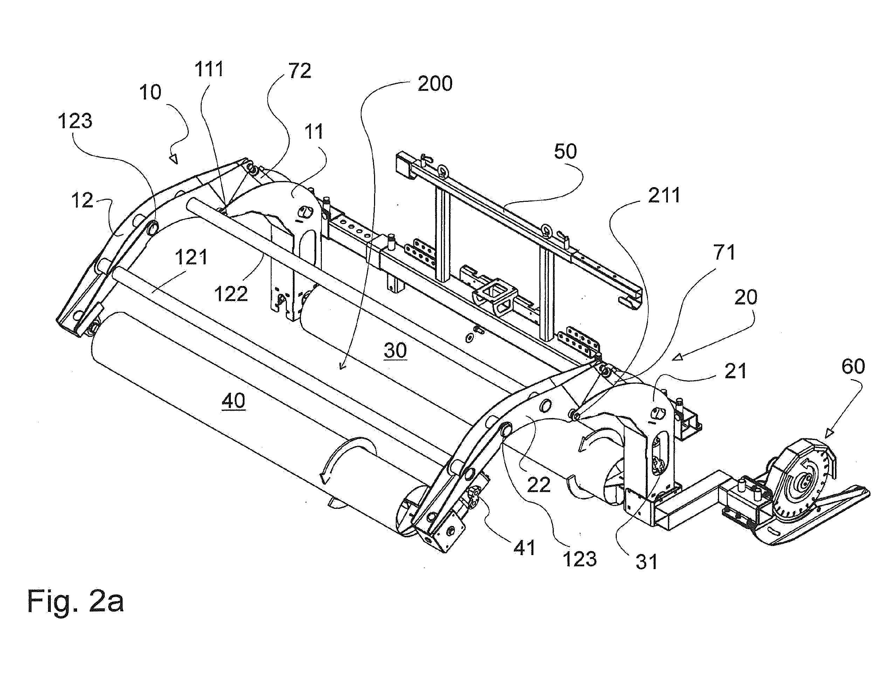

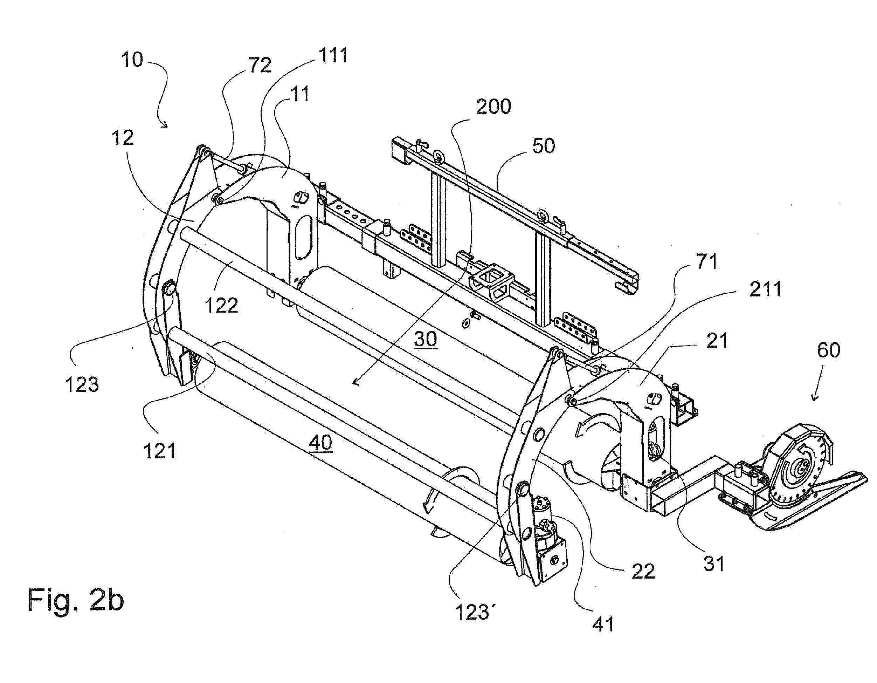

Wie ersichtlich, steht zumindest eine der Walzen zum Auf- oder Abwickeln teilweise in den Wickelraum 200 ein. Im gezeigten Fall stehen sogar beide Walzen 30 und 40 mit einem Teil ihres Umfanges beziehungsweise ihrer Mantelfläche in den Wickelraum 200 ein. Dadurch gelingt es, die Rollenbahn sozusagen ohne eine eigene Achse oder Welle aufzuwickeln. Während des Aufwickelvorganges bewegen sich die Walzen 30, 40 jeweils in einer zur Drehbewegung der Rolle bzw. Entwicklung gegenläufigen Bewegung, wie dies beispielsweise in Figur 2a durch Pfeile angedeutet ist. Hierdurch wird das Gewicht einer Welle eingespart und ein Transport der Welle, insbesondere einen Rücktransport nach Verlegen der Bahn, muss nicht mehr vorgenommen werden. Die Rolle kann ohne Welle aufgewickelt beziehungsweise abgewickelt werden, was erhebliche Vorteile gegenüber dem Stand der Technik mit sich bringt. An dem feststehenden Greifelement 21 ist in der Ausführungsform eine Transporthalterung 50 vorgesehen. Mit dem Bezugszeichen 51 wird ein elektromechanischer Antrieb angedeutet, wodurch die Transporthalterung in ihrer vertikalen Lage verstellbar ist. Dies erweist sich beispielsweise für das Aufnehmen beziehungsweise Ablegen einer Rolle als vorteilhaft. Mit dem Bezugszeichen 121 ist eine Aussteifung bezeichnet, die nur in Seitenansicht gezeigt ist. Gleiches gilt für eine weitere Aussteifung 122, die in Fig. 2 und 3 erkennbar ist. An dem bewegbaren Greifelement 22 ist eine Walzenschwenkachse 123 dargestellt, über die die Walze 40 verschwenkbar ist. Dies ist in der gezeigten Ausführungsform so nicht vorgesehen, die Möglichkeit dazu ist allerdings gegeben. Des Weiteren besteht nach der Erfindung auch die Möglichkeit, an dieser Walzenschwenkachse 123 eine Wechsel-Schnittstelle vorzusehen, mittels derer die wirksame Länge des bewegbaren Greifelementes 22 veränderbar, bspw. verlänger- oder verkürzbar, ist. Auch diese Ausführungsform ist in der Zeichnung nicht gezeigt. Natürlich ist klar, dass in Seitenansicht die Vorrichtung nur mit einer Zange 20 gezeigt ist, während in den nächsten Figuren die Ausgestaltung der Vorrichtung mit zwei Zangen 10, 20 gezeigt ist.

Die Fig. 2a zeigt eine dreidimensionale Darstellung der Vorrichtung nach der Erfindung mit geöffneten Zangen 10 und 20, die über die Aussteifungen 121 und 122 fest miteinander verbunden sind. Die Aussteifungen 121, 122 bestimmen auch die wirksame Breite der aufzunehmenden beziehungsweise abzuwickelnden Rollenbahn als Maximalmaß. Die Greifelementachse ist mit 111 bezeichnet. Selbstverständlich ist es möglich, in dem Wickelraum 200 schmalere Rollen zu wickeln als die Breite der Vorrichtung selbst dies zulässt. Mit Pfeilen an den Walzen 30 und 40 ist angedeutet, in welche Richtung sich die Walzen bewegen. Alle weiteren Merkmale sind bereits vorgestellt worden und werden hier mit den gleichen Bezugszeichen wieder verwendet. Auf eine erneute Vorstellung kann verzichtet werden. Lediglich die unterschiedliche Bezeichnung der Hydraulikzylinder an der ersten Zange 10 beziehungsweise zweiten Zange 20 ist gegenüber der Fig. 1 hinzugekommen. Dabei ist an der ersten Zange 10 ein Hydraulikzylinder 72 und an der zweiten Zange 20 ein Hydraulikzylinder 71 vorgesehen.

Die Fig. 2b zeigt die in Fig. 2a dargestellte Ausführungsform der Vorrichtung mit geschlossenen Zangen 10, 20. Ergänzend ist noch zu bemerken, dass das feststehende Zangenelement der ersten Zange 10 natürlich mit 11 bezeichnet ist, während das bewegbare Zangenelement hier das Bezugszeichen 12 trägt.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinanderkombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtungen zum Auf- oder Abwickeln von flächigem Bahnenmaterial, wie z.B. Bahnen bzw. Streifen von Kunstrasen, mit mindestens einer Zange, **gekennzeichnet durch** wenigstens zwei einen Wickelraum zumindest teilweise begrenzende Greif- bzw. Zangenelemente mit jeweils wenigstens einer an den Enden der Greif- bzw. Zangenelemente angeordneten, eine Walzenfläche aufweisenden Walze, wobei wenigstens eine der Walzen rotatorisch antreibbar ist und die Walzen an einer Wicklung des flächigen Bahnenmaterials anlegbar sind, um die Wicklung für das Auf- oder Abwickeln des flächigen Bahnenmaterials in eine zu einer Drehbewegung der Walzen gegenläufige Wickelbewegung zu versetzen.

2. Vorrichtung nach Anspruch 1, **dadurch gekennzeichnet, dass** zwei sich parallel zueinander erstreckende Walzen (30, 40) vorgesehen sind.

3. Vorrichtung nach Anspruch 1 oder 2, **dadurch gekennzeichnet, dass** die mindestens eine Walze (30, 40) zwangsangetrieben ist, insbesondere wobei die mindestens eine Walze (30, 40) einen elektrischen oder hydraulischen Antrieb (31, 41) aufweist.

4. Vorrichtung nach einem der vorhergehenden Ansprüche, **dadurch gekennzeichnet, dass** zwei parallel zueinander ausgerichtete Zangen (10, 20) vorgesehen sind und/oder die mindestens eine Walze (30, 40) an mindestens einer Zange (10, 20) gelagert ist und/oder die mindestens eine Zange (10, 20) zum Durchführen einer Greifbewegung ausgebildet ist und/oder jede der Zangen (10, 20) feststehende (11, 21) und bewegbare (12, 22) Greif- oder Zangenelemente aufweist.

5. Vorrichtung nach Anspruch 4, **dadurch gekennzeichnet, dass** die Greif- oder Zangenelemente (11, 12, 21, 22) jeder Zange (10, 20) hydraulisch relativ zueinander bewegbar sind.

6. Vorrichtung nach einem der vorhergehenden Ansprüche, **dadurch gekennzeichnet, dass** an dem feststehenden Greif- oder Zangenelement (11, 21) jeweils eine Greifelementachse (111, 211) vorgesehen ist, über die, vorzugsweise angetrieben von Hydraulikzylindern (71, 72), die Greifbewegung als Schwenkbewegung erfolgt.

7. Vorrichtung nach einem der vorhergehenden Ansprüche, **dadurch gekennzeichnet, dass** an den bewegbaren Greif- oder Zangenelementen (12, 22) wenigstens eine Aussteifung (121), vorzugsweise zwei Aussteifungen (121, 122) vorgesehen sind.

8. Vorrichtung nach einem der vorhergehenden Ansprüche, **dadurch gekennzeichnet, dass** die an den bewegbaren Greif- oder Zangenelementen (12, 22) angeordnete Walze (40) an einer Walzenschwenkachse (123) schwenkbar gelagert ist oder die Walze (40) an der Walzenschwenkachse auswechselbar befestigt ist, um zum Beispiel die wirksame Länge der bewegbaren Greif- oder Zangenelemente (12, 22) zu verändern.

9. Vorrichtung nach einem der vorhergehenden Ansprüche weiter umfassend eine Transporthalterung (50) zum Transportieren der Vorrichtung.

10. Vorrichtung nach Anspruch 9, **dadurch gekennzeichnet, dass** die Transporthalterung (50) an feststehenden Greif- oder Zangenelementen (11, 12) der mindestens einen Zange (10, 20) angebunden ist und/oder die Transporthalterung (50) zum Anheben der Wicklung des flächigen Bahnenmaterials vertikal verkürzbar ist.

11. Vorrichtung nach einem der vorhergehenden Ansprüche 9 oder 10, **dadurch gekennzeichnet, dass** weiter umfassend einen elektromechanischen Antrieb (51) für die Transporthalterung (50).

12. Vorrichtung nach einem der vorhergehenden Ansprüche, weiter umfassend eine Schneid- oder Sägeeinrichtung (60) zum Schneiden von flächigem Bahnenmaterial.

13. Vorrichtung nach Anspruch 12, **dadurch gekennzeichnet, dass** die Schneid- oder Sägeeinrichtung (60) an einem feststehenden Greif- oder Zangenelement (11, 21) der mindestens einen Zange (10, 20) vorgesehen ist.

14. Vorrichtung nach Anspruch 12 oder 13, **dadurch gekennzeichnet, dass** die Sägeeinrichtung (60) als elektromotorisch betreibbare Kreissäge ausgebildet ist.

15. Vorrichtung nach einem der vorhergehenden Ansprüche, die als Anbauvorrichtung an einem selbstfahrenden Fahrzeug oder als selbstfahrendes Fahrzeug ausgeführt ist
